# EUROPEAN PATENT APPLICATION

(11) **EP 4 270 523 A1**
(43) Date of publication of application: **01.11.2023**
(21) Application number: 21911056.6
(22) Date of filing: 24.12.2021
(51) Int. Cl.: H01M 4/13, H01M 4/131, H01M 4/134, H01M 4/136, H01M 4/38, H01M 4/48, H01M 4/505, H01M 4/525, H01M 4/58, H01M 10/052

(54) **POSITIVE ELECTRODE ACTIVE MATERIAL FOR NON-AQUEUOUS ELECTROLYTE SECONDARY BATTERY, AND NON-AQUEOUS ELECTROLYTE SECONDARY BATTERY**

(30) Priority: 25.12.2020 JP 2020216213
(71) Applicant: Panasonic Intellectual Property Management Co., Ltd., Osaka-shi, Osaka 540-6207 (JP)
(72) Inventor: KAWADA, Hiroshi, Kadoma-shi, Osaka 571-0057 (JP)
(74) Representative: Novagraaf International SA
(86) International application number: PCT/JP2021/048205
(87) International publication number: WO 2022/138919

(57) **Abstract**

Provided is a positive electrode active material for a non-aqueous electrolyte secondary battery, the material contributing to both charge capacity and discharge voltage. This positive electrode active material contains a lithium metal composite oxide represented by general formula xLi_{y}MO₂-(1-x)Li_{z}MO₂ (where 0<x<0.4, 1.5≤y≤2.5, 0.9≤z≤1.5, and M is one or more elements selected from the group consisting of transition metals and Al, Si, Sn, Ge, Sb, Bi, Mg, Ca, and Sr). The lithium metal composite oxide has a layered structurer, and has, in a single secondary particle, Li occupying an oxygen tetrahedral site and Li occupying an oxygen octahedral site.

## Description

### TECHNICAL FIELD

The present disclosure relates to a positive electrode active material for a non-aqueous electrolyte secondary battery, and to a non-aqueous electrolyte secondary battery.

### BACKGROUND

In the related art, non-aqueous electrolyte secondary batteries are widely in use in which the battery is charged and discharged by moving Li ions or the like between a positive electrode and a negative electrode. In the recent years, further improvements in battery characteristics are demanded. Patent Literature 1 discloses a secondary battery in which Li₂NiO₂ is contained in the positive electrode so as to supply a sufficient amount of Li ions to the negative electrode during charging, so that reduction of a battery capacity is suppressed while realizing an advantage in an over-discharge characteristic.

### CITATION LIST

### PATENT LITERATURE

PATENT LITERATURE 1: JP 2005-521220 A

### SUMMARY

### PROBLEM TO BE SOLVED

When a charge capacity (battery capacity) is increased, there may be cases in which a discharge voltage is reduced. Li₂NiO₂ has poor reversibility with regard to absorption and release of Li ions, and, in the technique disclosed in Patent Literature 1, there may be cases in which, by containing Li₂NiO₂ in the positive electrode, the charge capacity of the battery is actually reduced. Therefore, there still remains room of improvement in realizing both the charge capacity and the discharge voltage.

An advantage of the present disclosure lies in provision of a positive electrode active material for a non-aqueous electrolyte secondary battery, which contributes to realizing both the charge capacity and the discharge voltage.

### SOLUTION TO PROBLEM

According to one aspect of the present disclosure, there is provided a positive electrode active material for a non-aqueous electrolyte secondary battery, the positive electrode active material including a lithium-metal composite oxide represented by a general formula xLi_{y}MO₂-(1-x)Li_{z}MO₂ (wherein 0<x<0.4, 1.5≤y≤2.5, 0.9≤z≤1.5, and M is one or more elements selected from the group consisting of transition metals, Al, Si, Sn, Ge, Sb, Bi, Mg, Ca, and Sr), wherein the lithium-metal composite oxide has a layer structure, and has, within one secondary particle, a Li element coordinated at a tetrahedral site of oxygen, and a Li element coordinated at an octahedral site of oxygen.

According to another aspect of the present disclosure, there is provided a non-aqueous electrolyte secondary battery including a positive electrode including the positive electrode active material for the non-aqueous electrolyte secondary battery, a negative electrode, and a non-aqueous electrolyte, wherein the negative electrode includes a negative electrode active material, and the negative electrode active material includes one material or a mixture of two or more materials selected from the group consisting of Si, SiC, SiO_{α} (wherein 0<α<2), Li_{β}SiO_{γ} (wherein 1<β≤4, 1<γ≤4), Sn, SnO₂, Sb, and Ge, in an amount of greater than or equal to 3%.

### ADVANTAGEOUS EFFECTS

With the positive electrode active material for the non-aqueous electrolyte secondary battery according to an aspect of the present disclosure, the discharge voltage of the battery can be improved while the charge capacity of the battery is improved.

### BRIEF DESCRIPTION OF DRAWINGS

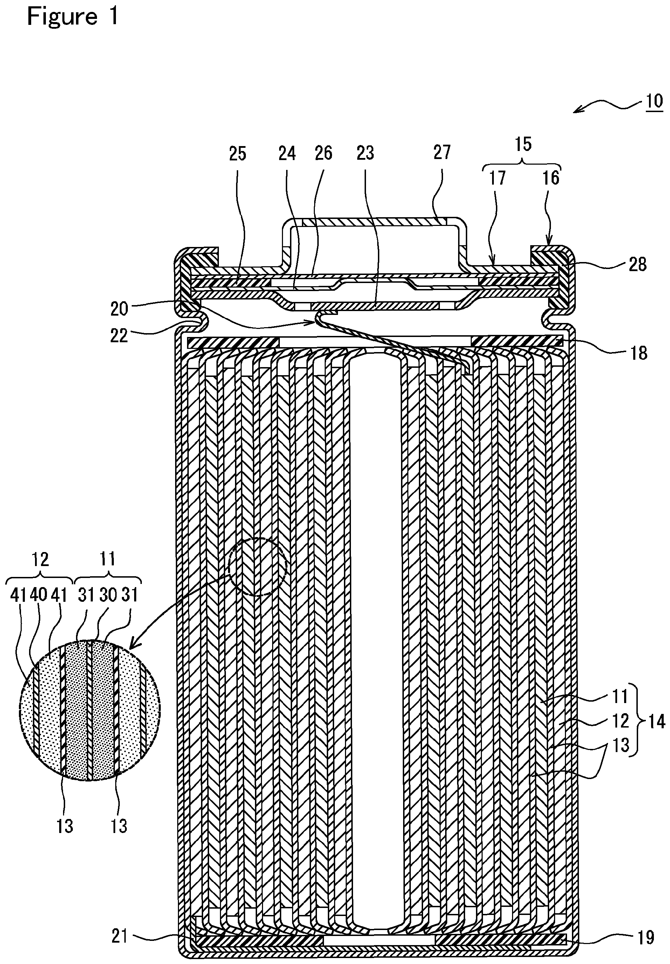

FIG. 1 is a cross-sectional diagram of a non-aqueous electrolyte secondary battery according to an embodiment of the present disclosure.

### DESCRIPTION OF EMBODIMENTS

A non-aqueous electrolyte secondary battery is charged and discharged by moving Li ions between a positive electrode and a negative electrode. During charging and discharging of the non-aqueous electrolyte secondary battery, a phenomenon is observed in which a part of the Li ions moved from the positive electrode to the negative electrode during the charging are continued to be absorbed by the negative electrode active material and are not released from the negative electrode during the discharging, resulting in reduction of a capacity maintenance percentage of the battery. This phenomenon is observed also in the case in which a typical carbon-based material such as graphite is used, and is particularly significant when an irreversible material is used such as a Si-based material. In order to suppress the reduction of the capacity maintenance percentage during the charging and discharging, a method is being considered in which Li₂NiO₂ is contained in the positive electrode as a Li compensation agent so that Li ions in a sufficient amount are supplied to the negative electrode during the charging. However, Li₂NiO₂ has poor reversibility with regard to absorption and release of the Li ions, and there may be cases in which the inclusion of Li₂NiO₂ in the positive electrode actually results in reduction of the charge capacity of the battery. In addition, when the charge capacity is increased, the discharge voltage is reduced, and thus, it is difficult to realize both the charge capacity and the discharge voltage.

The present inventors have eagerly reviewed for solving the problem, and found that both the charge capacity of the battery and the discharge voltage of the battery can be specifically realized by using, as the positive electrode active material, a lithium-metal composite oxide having a predetermined composition and particular coordinate positions of Li elements. It can be deduced that, when the lithium-metal composite oxide is used which is represented by a general formula xLi_{y}MO₂-(1-x)Li_{z}MO₂ wherein 0<x<0.4, a ratio of an Li element coordinated at a tetrahedral site of oxygen to an Li element coordinated at an octahedral site of oxygen may be set in a desirable range, resulting in realization of both the charge capacity and the discharge voltage..

A non-aqueous electrolyte secondary battery according to an embodiment of the present disclosure will now be described in detail. In the following, a circular cylindrical battery in which an electrode assembly of a wound type is housed in an outer housing of a circular cylindrical shape is exemplified, but the electrode assembly is not limited to the wound type, and may alternatively be of a layered type in which a plurality of positive electrodes and a plurality of negative electrodes are alternately layered one layer by one layer with a separator therebetween. In addition, the outer housing is not limited to the circular cylindrical shape, and may alternatively be of, for example, a polygonal shape, a coin shape, or the like. Alternatively, the outer housing may be a battery casing formed from laminated sheets including a metal layer and a resin layer.

FIG. 1 is a cross-sectional diagram of a non-aqueous electrolyte secondary battery 10 according to an embodiment of the present disclosure. As shown in FIG. 1, the non-aqueous electrolyte secondary battery 10 includes an electrode assembly 14, a non-aqueous electrolyte (not shown), and a battery casing 15 which houses the electrode assembly 14 and the non-aqueous electrolyte. The electrode assembly 14 has a wound type structure in which a positive electrode 11 and a negative electrode 12 are wound with a separator 13 therebetween. The battery casing 15 is formed from an outer housing can 16 having a circular cylindrical shape with a bottom, and a sealing assembly 17 which blocks an opening of the outer housing can 16.

The electrode assembly 14 is formed from the positive electrode 11 of an elongated shape, the negative electrode 12 of an elongated shape, two separators 13 of an elongated shape, a positive electrode tab 20 joined to the positive electrode 11, and a negative electrode tab 21 joined to the negative electrode 12. The negative electrode 12 is formed in a size slightly larger than the positive electrode 11 in order to prevent precipitation of lithium. That is, the negative electrode 12 is formed to be longer in a longitudinal direction and in a width direction (short side direction) than the positive electrode 11. The two separators 13 are formed in a size slightly larger at least than the positive electrode 11, and are placed, for example, to sandwich the positive electrode 11.

The non-aqueous electrolyte secondary battery 10 includes insulating plates 18 and 19 placed respectively above and below the electrode assembly 14. In the illustrated example structure of FIG. 1, the positive electrode tab 20 attached to the positive electrode 11 extends through a through hole of the insulating plate 18 toward the side of the sealing assembly 17, and the negative electrode tab 21 attached to the negative electrode 12 extends to the side of the bottom of the outer housing can 16 through an outer side of the insulating plate 19. The positive electrode tab 20 is connected to a lower surface of a bottom plate 23 of the sealing assembly 17 by welding or the like, and a cap 27 of the sealing assembly 17 electrically connected to the bottom plate 23 serves as a positive electrode terminal. The negative electrode tab 21 is connected to an inner surface of the bottom of the outer housing can 16 by welding or the like, and the outer housing can 16 serves as a negative electrode terminal.

The outer housing can 16 is, for example, a metal container of a circular cylindrical shape with a bottom. A gasket 28 is provided between the outer housing can 16 and the sealing assembly 17, so as to airtightly seal an internal space of the battery casing 15. The outer housing can 16 has a groove portion 22 which is formed, for example, by pressing a side surface portion from an outer side, and which supports the sealing assembly 17. The groove portion 22 is desirably formed in an annular shape along a circumferential direction of the outer housing can 16, and supports the sealing assembly 17 with the upper surface thereof.

The sealing assembly 17 has a structure in which the bottom plate 23, a lower vent member 24, an insulating member 25, an upper vent member 26, and the cap 27 are layered in this order from the side of the electrode assembly 14. The members of the sealing assembly 17 have, for example, a circular disk shape or a ring shape, and members other than the insulating member 25 are electrically connected to each other. The lower vent member 24 and the upper vent member 26 are connected to each other at respective center parts, and the insulating member 25 interposes between peripheral parts of the vent members. When an inner pressure of the battery increases due to abnormal heat generation, the lower vent member 24 deforms to press the upper vent member 26 upward toward the cap 27 and ruptures, and a current path between the lower vent member 24 and the upper vent member 26 is shut out. When the inner pressure further increases, the upper vent member 26 ruptures, and gas is discharged from an opening of the cap 27.

The positive electrode 11, the negative electrode 12, the separator 13, and the non-aqueous electrolyte forming the non-electrolyte secondary battery 10 will now be described in detail. In particular, a positive electrode active material included in a positive electrode mixture layer 31 forming a part of the positive electrode 11 will be described in detail.

### [Positive Electrode]

The positive electrode 11 comprises a positive electrode current collector 30, and the positive electrode mixture layer 31 formed over both surfaces of the positive electrode current collector 30. For the positive electrode current collector 30, there may be employed a foil of a metal which is stable within a potential range of the positive electrode 11 such as aluminum and an aluminum alloy, a film on a surface layer of which the metal is placed, or the like. The positive electrode mixture layer 31 may include a positive electrode active material, a conductive agent, and a binder agent. The positive electrode 11 can be produced, for example, by applying a positive electrode mixture slurry including the positive electrode active material, the conductive agent, the binder agent, or the like over a surface of the positive electrode current collector 30, drying the applied film, and compressing the dried film to form the positive electrode mixture layer 31 over both surfaces of the positive electrode current collector 30.

As the conductive agent included in the positive electrode mixture layer 31, there may be exemplified carbon-based materials such as carbon black, acetylene black, Ketjenblack, graphite, or the like. As the binder agent included in the positive electrode mixture layer 31, there may be exemplified a fluororesin such as polytetrafluoroethylene (PTFE), polyvinylidene fluoride (PVdF), polyacrylonitrile (PAN), polyimide, an acrylic resin, polyolefin, or the like. These resins may be used in combination with carboxymethyl cellulose (CMC) or a salt thereof, polyethylene oxide (PEO), or the like.

The positive electrode active material included in the positive electrode mixture layer 31 includes a lithium-metal composite oxide (Y) represented by a general formula xLi_{y}MO₂-(1-x)Li_{z}MO₂ (wherein 0<x<0.4, 1.5≤y≤2.5, 0.9≤z≤1.5, and M is one or more elements selected from the group consisting of transition metals, Al, Si, Sn, Ge, Sb, Bi, Mg, Ca, and Sr). The positive electrode active material may include lithium-metal composite oxides other than the lithium-metal composite oxide (Y), or other compounds, within a range of not adversely affecting the advantages of the present disclosure.

The lithium-metal composite oxide (Y) is, for example, a secondary particle formed by a plurality of primary particles being aggregated. A particle size of the primary particles forming the secondary particle is, for example, 0.05-1 µm. The particle size of the primary particles is measured as a diameter of a circumscribing circle in a particle image observed by a scanning electron microscope (SEM).

A particle size of the secondary particles of the lithium-metal composite oxide (Y) is, for example, 3 µm~30 µm in a volume-based median size (D50). D50 means a particle size at which an accumulation of frequencies in a volume-based particularity distribution reaches 50% from the lower side, and is also called a middle size. The particularity distribution of the lithium-metal composite oxide (Y) can be measured using a particularity distribution measurement apparatus of a laser diffraction type (for example, MT3000II manufactured by MicrotracBEL corporation), and using water as a dispersive medium.

In the general formula xLi_{y}MO₂-(1-x)Li_{z}MO₂ representing the lithium-metal composite oxide (Y), M is desirably one or more elements selected from the group consisting of Ni, Co, Mn, Fe, and Al.

The lithium-metal composite oxide (Y) has a layer structure, and has, within one secondary particle, a Li element coordinated at a tetrahedral site of oxygen, and a Li element coordinated at an octahedral site of oxygen. The layer structure of the lithium-metal composite oxide (Y) includes, for example, a transition metal layer, a Li layer, and an oxygen layer. The Li layer is a layer to and from which Li reversibly enters and exits.

The lithium-metal composite oxide includes a space group R3-m as the predominant group, and may have a region of a space group P3-m1 as a layer defect. By having the space group R3-m as the predominant group, the charge capacity is improved and the crystal structure is stabilized. By having the region of the space group P3-m1 as the layer defect, the discharge voltage is improved. In the general formula xLi_{y}MO₂-(1-x)Li_{z}MO₂ representing the lithium-metal composite oxide (Y), parameters x and (1-x) respectively show ratios of the region of the space group P3-m1 and the region of the space group R3-m.

The lithium-metal composite oxide (Y) has, in XRD measurement of CuKα, a peak in a range of greater than or equal to 17.1° and less than 18.1°, and a peak in a range of greater than or equal to 18.1° and less than 19.1°, and an accumulated intensity S1 of the range of greater than or equal to 17.1° and less than 18.1°, and an accumulated intensity S2 of the range of greater than or equal to 18.1° and less than 19.1°may satisfy a condition 0<S1/(S1+S2)<0.4. The parameter S1/(S1+S2) shows a ratio of the region of the space group P3-m1.

The XRD measurement may be performed, for example, under the following conditions using a powder X-ray diffractometer (product name "RINT-TTR" manufactured by Rigaku Corporation, with a radiation source of Cu-Kα).
Measurement range: 15-120°
Scan rate: 4°/min.
Analysis range: 30-120°
Background: B-spline
Profile function: Split pseudo-Voigt function
ICSD No.: 98-009-4814

In a state of being discharged to 1.5 V, the lithium-metal composite oxide (Y) may have a composition represented by a general formula xLi_{y}MO₂-(1-x)Li_{z}MO₂ (wherein 0<x<0.4, 1.5≤y≤2.5, 0.9≤z≤1.5, and M is the M described above). The composition of the lithium-metal composite oxide (Y) changes with charging and discharging of the battery, but is recovered to the above-described composition when discharged to 1.5 V.

The lithium-metal composite oxide (Y) included in the positive electrode active material can be produced, for example, by immersing a lithium-metal composite oxide (X) having the space group R3-m and Li metal in a benzophenone-2Me-THF solution in which benzophenone is dissolved in 2-methyl tetrahydrofuran (2-MeTHF), stirring for 1~24 hours at the room temperature, and then filtering. With the process described above, the space group P3-m1 is introduced as the layer defect in the lithium-metal composite oxide (X) having the space group R3-m. A ratio of introduction of the space group P3-m1 can be adjusted, for example, by the temperature, the concentration of benzophenone in the 2-MeTHF, a stirring time, or the like.

The lithium-metal composite oxide (X) having the space group R3-m can be synthesized, for example, by adding and mixing a Li source to a metal composite compound which does not contain Li, and baking at a temperature of 200°C~1050°C. As the metal composite compound, there may be exemplified oxides, hydroxides, carbonate compounds, or the like, containing Ni, Mn, or the like. As the Li source, there may be exemplified LiOH or the like.

### [Negative Electrode]

The negative electrode 12 comprises a negative electrode current collector 40 and a negative electrode mixture layer 41 formed over both surfaces of the negative electrode current collector 40. For the negative electrode current collector 40, there may be employed a foil of metal stable within a potential range of the negative electrode 12 such as copper, a copper alloy, or the like, a film on a surface layer of which the metal is placed, or the like. The negative electrode mixture layer 41 may include a negative electrode active material and a binder agent. The negative electrode 12 can be produced, for example, by applying a negative electrode mixture slurry including the negative electrode active material, the binder agent, or the like over a surface of the negative electrode current collector 40, drying the applied film, and rolling the dried film, to form the negative electrode mixture layer 41 over both surfaces of the negative electrode current collector 40. In a charged state, lithium metal may precipitate on the negative electrode 12.

No particular limitation is imposed on the negative electrode active material included in the negative electrode mixture layer 41 so long as the negative electrode active material can reversibly occlude and release lithium ions, and in general, a carbon-based material such as graphite is used. The graphite may be a natural graphite such as flake graphite, massive graphite, amorphous graphite, or the like, or an artificial graphite such as massive artificial graphite, graphitized meso-phase carbon microbeads, or the like. Alternatively, as the negative electrode active material, there may be employed a metal which forms an alloy with Li such as Si, Sn, or the like, a metal compound including Si, Sn, or the like, or lithium-titanium composite oxide, or the like. Alternatively, materials may be employed in which a carbon coating is formed over these materials. The negative electrode active material desirably contains one material or a mixture or two or more materials selected from the group consisting of Si, SiC, SiO_{α} (wherein 0<α<2), Li_{β}SiO_{γ} (wherein 1<β≤4, 1<γ≤4), Sn, SnO₂, Sb, and Ge, in an amount of greater than or equal to 3%.

As the binder agent included in the negative electrode mixture layer 41, similar to the case of the positive electrode 11, a fluororesin such as PTFE, PVdF, or the like, PAN, polyimide, an acrylic resin, polyolefin, or the like may be employed, but desirably, styrenebutadiene rubber (SBR) is employed. The negative electrode mixture layer 41 may further contain CMC or a salt thereof, polyacrylic acid (PAA) or a salt thereof, polyvinyl alcohol (PVA), or the like.

### [Separator]

For the separator 13, for example, a porous sheet having an ion permeability and an insulating property is employed. Specific examples of the porous sheet include a microporous thin film, a woven fabric, a non-woven fabric, or the like. As a material of the separator, there may be exemplified polyolefin such as polyethylene and polypropylene, cellulose, or the like. The separator 13 may have a single-layer structure or a layered structure. Alternatively, a resin layer having a high thermal endurance such as an aramid resin, and a filler layer including a filler of an inorganic compound may be provided over a surface of the separator 13.

### [Non-aqueous Electrolyte]

The non-aqueous electrolyte includes, for example, a non-aqueous solvent and an electrolyte salt dissolved in the non-aqueous solvent. For the non-aqueous solvent, for example, esters, ethers, nitriles such as acetonitrile, amides such as dimethylformamide, or a mixture solvent of two or more of these solvents may be employed. The non-aqueous solvent may include a halogen-substituted product in which at least a part of hydrogens of the solvent described above is substituted with a halogen atom such as fluorine. Examples of the halogen-substituted product include a fluorinated cyclic carbonate such as fluoroethylene carbonate (FEC), a fluorinated chain carbonate, or a fluorinated chain carboxylate such as fluoromethyl propionate (FMP).

Examples of the esters include cyclic carbonates such as ethylene carbonate (EC), propylene carbonate (PC), and butylene carbonate, chain carbonates such as dimethyl carbonate (DMC), ethylmethyl carbonate (EMC), diethyl carbonate (DEC), methylpropyl carbonate, ethylpropyl carbonate, and methylisopropyl carbonate, cyclic carboxylates such as γ-butyrolactone (GBL) and γ-valerolactone (GVL), and chain carboxylates such as methyl acetate, ethyl acetate, propyl acetate, methyl propionate (MP), and ethyl propionate (EP).

Examples of the ethers include cyclic ethers such as 1,3-dioxolane, 4-methyl-1,3-dioxolane, tetrahydrofuran, 2-methyl tetrahydrofuran, propylene oxide, 1,2-butylene oxide, 1,3-dioxane, 1,4-dioxane, 1,3,5-trioxane, furan, 2-methyl furan, 1,8-cineol, and crown ether, and chain ethers such as 1,2-dimethoxy ethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxy benzene, 1,2-diethoxy ethane, 1,2-dibutoxy ethane, diethylene glycol dimethyl ether, diethylene glycol diethyl ether, diethylene glycol dibutyl ether, 1,1-dimethoxy methane, 1,1-diethoxy ethane, triethylene glycol dimethyl ether, and tetraethylene glycol dimethyl ether.

The electrolyte salt is desirably a lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (wherein 1<x<6, n is 1 or 2), LiB₁₀Cl₁₀, LiCl, LiBr, LiI, lithium chloroborane, lithium lower aliphatic carboxylate, borate salts such as Li₂B₄O₇ and Li(B(C₂O₄)F₂), and imide salts such as LiN(SO₂CF₃)₂, and LiN(CₗF₂ₗ₊₁SO₂)(CₘF₂ₘ₊₁SO₂) (wherein each of l and m is an integer greater than or equal to 0). As the lithium salt, these materials may be used as a single material or a mixture of a plurality of these materials may be used. Of these, LiPF₆ is desirably used, from the viewpoints of ion conductivity, electrochemical stability, or the like. A concentration of the lithium salt is, for example, 0.8 ~ 1.8 mol per 1 L of the non-aqueous solvent. Further, vinylene carbonate and propane sultone-based additive may be added.

### EXAMPLES

The present disclosure will now be described in further detail with reference to Example and Comparative Examples. The present disclosure, however, is not limited to the Example described below.

### <Example 1>

### [Production of Positive Electrode Active Material]

A nickel-manganese composite hydroxide obtained through coprecipitation and having a composition of Ni_{0.8}Mn_{0.2}(OH)₂ was thermally treated at a temperature of 500°C, to obtain a nickel-manganese composite oxide. Then, the nickel-manganese composite oxide and LiOH were mixed in such a manner that a molar ratio between a total amount of Ni and Mn and Li was 1.02:1. The mixture was baked for 10 hours at a temperature of 900°C, and was then ground, to obtain a lithium-metal composite oxide (X) having R3-m.

The lithium-metal composite oxide (X) and a Li metal were immersed in a benzophenone-2Me-THF solution of 1 mol/L, and, after stirring for 12 hours at the room temperature, filtering was performed, to produce a lithium-metal composite oxide (Y), which was set as a positive electrode active material. As a result of XRD measurement, it was found that S1/(S1+S2) of the lithium-metal composite oxide was 0.21.

### [Production of Positive Electrode]

The positive electrode active material, acetylene black, and polyvinylidene fluoride (PVdF) were mixed with a solid content mass ratio of 96.3:2.5:1.2, a suitable amount of N-methyl-2-pyrrolidone (NMP) was added, and the mixture was kneaded to prepare a positive electrode mixture slurry. The positive electrode mixture slurry was applied over both surfaces of a positive electrode core made of an aluminum foil, the applied film was dried, the dried film was rolled using a roller, and the resulting structure was cut in a predetermined electrode size, to obtain a positive electrode in which a positive electrode mixture layer was formed over both surfaces of the positive electrode core.

### [Preparation of Non-aqueous Electrolyte]

A non-aqueous solvent was obtained by mixing fluoroethylene carbonate (FEC), ethylene carbonate (EC), and ethylmethyl carbonate (EMC) in a volume ratio of 1:1:6. LiPF₆ was dissolved in the non-aqueous solvent in a concentration of 1.0 mol/L, to obtain a non-aqueous electrolyte.

### [Production of Test Cell]

Lead wires were attached to the positive electrode and to a counter electrode made of the Li metal, and the positive electrode and the counter electrode were placed opposing each other with a separator made of polyolefin therebetween, to produce an electrode assembly. The electrode assembly and the non-aqueous electrolyte were sealed in an outer housing formed from an aluminum laminated film, to produce a test cell.

### [Measurement of Charge Capacity and Average Discharge Voltage]

Under a temperature environment of 25°C, the test cell was charged with a constant current of 0.2C until a cell voltage reached 4.5 V, and then charged with a constant voltage of 4.5 V until a current value reached 0.02C. Then, the test cell was discharged with a constant current of 0.2C until the cell voltage reached 2.5 V. A charge capacity and an average discharge voltage in this process was measured.

### <Comparative Example 1>

A test cell was produced in a manner similar to Example 1 except that the stirring time of the lithium-metal composite oxide (X) in the benzophenone-2Me-THF solution was changed to 24 hours in the production of the positive electrode active material, and the test cell was assessed.

### <Comparative Example 2>

A test cell was produced in a manner similar to Example 1 except that the stirring conditions of the lithium-metal composite oxide (X) in the benzophenone-2Me-THF solution were set to 45°C and 24 hours in the production of the positive electrode active material, and the test cell was assessed.

### <Comparative Example 3>

A test cell was produced in a manner similar to Example 1 except that the lithium-metal composite oxide (X) was not immersed in the benzophenone-2Me-THF solution in the production of the positive electrode active material, and the lithium-metal composite oxide (X) was used as the positive electrode active material, and the test cell was assessed.

### <Comparative Example 4>

A test cell was produced in a manner similar to Example 1 except that the stirring conditions of the lithium-metal composite oxide (X) in the benzophenone-2Me-THF solution were set to 45°C and 48 hours in the production of the positive electrode active material, and the test cell was assessed.

TABLE 1 shows the charge capacities and the average discharge voltages of the test cells of Example and Comparative Examples. TABLE 1 also shows values for S1/(S1+S2) of the positive electrode active materials, calculated through the XRD measurement.

**[TABLE 1]**

| | S1/(S1+S2) | CHARGE CAPACITY [mAh/g] | AVERAGE DISCHARGE VOLTAGE [V] |
|---|---|---|---|
| EXAMPLE 1 | 0.21 | 295.6 | 3.892 |
| COMPARATIVE EXAMPLE 1 | 0.43 | 349.8 | 3.772 |
| COMPARATIVE EXAMPLE 2 | 0.68 | 425.3 | 3.771 |
| COMPARATIVE EXAMPLE 3 | 0.00 | 236.8 | 3.917 |
| COMPARATIVE EXAMPLE 4 | 1.00 | 415.4 | 3.525 |

As shown in TABLE 1, the test cell of Example has a better balance of the charge capacity and the average discharge voltage in comparison to the test cells of Comparative Examples 1 to 4. Thus, in the test cell of Example, the discharge voltage can be improved while the charge capacity is improved.

### REFERENCE SIGNS LIST

10 non-aqueous electrolyte secondary battery, 11 positive electrode, 12 negative electrode, 13 separator, 14 electrode assembly, 15 battery casing, 16 outer housing can, 17 sealing assembly, 18, 19 insulating plate, 20 positive electrode tab, 21 negative electrode tab, 22 groove portion, 23 bottom plate, 24 lower vent member, 25 insulating member, 26 upper vent member, 27 cap, 28 gasket, 30 positive electrode current collector, 31 positive electrode mixture layer, 40 negative electrode current collector, 41 negative electrode mixture layer

## Claims

1. A positive electrode active material for a non-aqueous electrolyte secondary battery, the positive electrode active material comprising:
a lithium-metal composite oxide represented by a general formula xLi_{y}MO₂-(1-x)Li_{z}MO₂ (wherein 0<x<0.4, 1.5≤y≤2.5, 0.9≤z≤1.5, and M is one or more elements selected from the group consisting of transition metals, Al, Si, Sn, Ge, Sb, Bi, Mg, Ca, and Sr), wherein
the lithium-metal composite oxide has a layer structure, and has, within one secondary particle, a Li element coordinated at a tetrahedral site of oxygen, and a Li element coordinated at an octahedral site of oxygen.

2. The positive electrode active material for the non-aqueous electrolyte secondary battery according to claim 1, wherein
the lithium-metal composite oxide has a space group R3-m as a predominant group, and has a region of a space group P3-m1 as a layer defect.

3. The positive electrode active material for the non-aqueous electrolyte secondary battery according to claim 1 or 2, wherein
the lithium-metal composite oxide has, in XRD measurement of CuKα, a peak in a range of greater than or equal to 17.1° and less than 18.1°, and a peak in a range of greater than or equal to 18.1° and less than 19.1°, and an accumulated intensity S1 of the range of greater than or equal to 17.1° and less than 18.1° and an accumulated intensity S2 of the range of greater than or equal to 18.1° and less than 19.1° satisfy a condition of 0<S1/(S1+S2)<0.4.

4. The positive electrode active material for the non-aqueous electrolyte secondary battery according to any one of claims 1 to 3, wherein
the M is one or more elements selected from the group consisting of Ni, Co, Mn, Fe, and Al.

5. A non-aqueous electrolyte secondary battery comprising:
a positive electrode including the positive electrode active material for the non-aqueous electrolyte secondary battery according to any one of claims 1 to 4;
a negative electrode; and
a non-aqueous electrolyte, wherein
the negative electrode comprises a negative electrode active material, and
the negative electrode active material includes one material or a mixture of two or more materials selected from the group consisting of Si, SiC, SiO_{α} (wherein 0<α<2), Li_{β}SiO_{γ} (wherein 1<β≤4, 1<γ≤4), Sn, SnO₂, Sb, and Ge, in an amount of greater than or equal to 3%.

6. The non-aqueous electrolyte secondary battery according to claim 5, wherein
lithium metal precipitates on the negative electrode in a charged state.

7. The non-aqueous electrolyte secondary battery according to claim 5 or 6, wherein
in a state of being discharged to 1.5 V, the lithium-metal composite oxide has a composition represented by a general formula xLi_{y}MO₂-(1-x)Li_{z}MO₂ (wherein 0<x<0.4, 1.5≤y≤2.5, 0.9≤z≤1.5, and Mis the M).
